(19) Europäisches Patentamt
European Patent Office
Office européen des brevets

(11) **EP 3 882 666 B1**

(12) **EUROPEAN PATENT SPECIFICATION**

(45) Date of publication and mention
of the grant of the patent:
**17.01.2024 Bulletin 2024/03**

(21) Application number: **19884025.8**

(22) Date of filing: **12.11.2019**

(51) International Patent Classification (IPC):
**G01S 19/21** *(2010.01)* **H04W 56/00** *(2009.01)*

(52) Cooperative Patent Classification (CPC):
**H04W 56/001; G01S 19/215;** G01S 19/21

(86) International application number:
**PCT/CN2019/117515**

(87) International publication number:
**WO 2020/098646 (22.05.2020 Gazette 2020/21)**

(54) **METHOD, DEVICE AND SYSTEM FOR DETECTING PSEUDO GNSS INTERFERENCE**

VERFAHREN, VORRICHTUNG UND SYSTEM ZUR ERKENNUNG VON
PSEUDO-GNSS-INTERFERENZ

PROCÉDÉ, DISPOSITIF ET SYSTÈME DE DÉTECTION D'INTERFÉRENCE PSEUDO-GNSS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2018 CN 201811351027**

(43) Date of publication of application:
**22.09.2021 Bulletin 2021/38**

(73) Proprietor: **ZTE Corporation
Shenzhen, Guangdong 518057 (CN)**

(72) Inventors:
• **LUO, Bin
Shenzhen, Guangdong 518057 (CN)**
• **ZENG, Wendi
Shenzhen, Guangdong 518057 (CN)**
• **HE, Li
Shenzhen, Guangdong 518057 (CN)**
• **WANG, Linlin
Shenzhen, Guangdong 518057 (CN)**

(74) Representative: **Canzler & Bergmeier
Patentanwälte
Partnerschaft mbB
Despag-Straße 6
85055 Ingolstadt (DE)**

(56) References cited:
WO-A1-2010/077790    WO-A2-2013/177181
CN-A- 1 815 255    CN-A- 104 508 511
US-A1- 2003 114 983    US-A1- 2004 203 461
US-A1- 2006 234 641    US-A1- 2012 038 512

• YAO LIHAO: "Multi-node Cooperative GPS
Deception Jamming Detection Technology
Research", CHINESE MASTER'S THESES
FULL-TEXT DATABASE, INFORMATION
SCIENCE AND TECHNOLOGY, no. 4, 15 April 2018
(2018-04-15), pages 1-73, XP055817040,
• Yao, Lihao: "Multi-node Cooperative GPS
Deception Jamming Detection Technology
Research", Chinese Master's Theses Full-text
Database, Information Science and Technology,
no. 4, 15 April 2018 (2018-04-15), pages 1-73,
XP055817040, ISSN: 1674-0246

## Description

### TECHNICAL FIELD

Embodiments of the present disclosure relate to, but are not limited to, the field of communications.

### BACKGROUND

The Global Navigation Satellite System (GNSS) includes Global Position System (GPS), Beidou, Galileo Glonass, or other navigation satellite systems having similar functions. Pseudo GNSS interference, which transmits pseudo signals close to true GNSS signals, leads a receiver at a target location to wrong information in positioning settlement. Generally, there are two types of pseudo GNSS interference: one is repeater interference, i.e., receiving a real satellite signal, storing the signal and delaying transmission of the signal; and the other is generative interference, i.e., generating and transmitting a navigation satellite standard message and signal, and performing precision and standard control on parameters such as a pseudo range of related satellites.

Nodes such as base stations often fail in a real networking environment due to pseudo GNSS interference problems. Specifically, pseudo GNSS interference will cause a pseudo range measured by a base station receiver to differ from a real pseudo range. As a result, an incorrect difference value between a local clock and a satellite-borne atomic clock is obtained, causing an error in time service of the base station, and even a base station fault. Influenced by the abnormal reference clock output by the GNSS signal of the base station, the base station loses a synchronization relation with surrounding base stations, and then uplink and downlink time slots of different base stations are staggered, resulting in a series of problems including a reduced call completing rate, an increased call drop rate, a reduced data service rate, and the like.

No proprietary method for detecting pseudo GNSS interference has been proposed yet, and a problematic base station affected by pseudo GNSS interference is difficult to position from a service representation. Generally speaking, positioning the base station affected by pseudo GNSS interference requires a professional carrying professional electronic equipment tools on site, which involves massive analysis, long time, complicate operation and extremely low efficiency, and meanwhile, the requirement on the skill level of the professional is very strict due to the need of manual intervention

A US patent application, whose publication number is US2006/0234641A1, discloses a system for detecting incidents of GPS signal jamming utilizes one or more cellular telecommunications networks where GPS signals are received at various geographically dispersed base stations for timing or synchronization purposes-e.g., certain CDMA-based mobile phone networks. Each base station is outfitted with a data routing subsystem that routes data relating to interruptions in the received GPS signal, as detected by the base station, to a real time national database. The data bases stores and processes the received data, and is configured to be accessed by government or other officials for assessing GPS interference across the geographic area covered by the cellular network(s). The GPS interruption/interference data may be graphically displayed, and it may be correlated with other relevant data.

In a document of "Multi-node Cooperative GPS Deception Jamming Detection Technology Research", CHINESE MASTER' S THESES FULL-TEXT DATABASE, INFORMATION SCIENCE AND TECHNOLOGY, no. 4, 15 April 2018 (2018-04-15), pages 1-73, XP055817040, it studies the jamming coordinate mapping feature, and obtain coordinate mapping feature, which provides a theoretical basis for the test, from theoretical analysis, numerical calculation, experimental verification.

An international patent application, whose international publication number is WO2013/177181A2, discloses systems, methods, apparatuses, and computer-readable media for providing radio frequency interference (RFI) awareness assistance data to global navigation satellite system (GNSS) receivers are described. In some embodiments, a first method includes receiving at a location server RFI situational information. The first method further includes maintaining at least one time and location dependent database of an RFI situation. The first method further includes sending at least one assistance data message to at least one receiver including the RFI situational information. In another embodiment, a second method includes receiving RFI awareness assistance data from a location server. The second method further includes adapting a position location measurement according to the received RFI awareness assistance data. The second method further includes calculating a location of the receiver based on at least in part on the adapted positon location measurement.

### SUMMARY

The invention is set out in the appended set of claims.

## BRIEF DESCRIPTION OF THE DRAWINGS

Accompanying drawings are provided for further understanding of the technical solution of the embodiments of the disclosure and constitute a part of the specification. Hereinafter, these drawings are intended to explain the technical solution of the embodiments of the disclosure together with the following exemplary embodiments, but should not be considered as a limitation to the technical solution of the embodiments of the disclosure.

FIG. 1 is a schematic diagram of a node affected by pseudo GNSS interference;
FIG. 2 is a flowchart of a method for detecting pseudo GNSS interference according to the present disclosure;
FIG. 3 is another flowchart of a method for detecting pseudo GNSS interference according to the present disclosure;
FIG. 4 is a networking schematic diagram of an absolute detection mode according to the disclosure;
FIG. 5 is a schematic diagram of comparison results before and after a node is affected by pseudo GNSS interference according to the present disclosure;
FIG. 6 is another flowchart of a method for detecting pseudo GNSS interference according to the present disclosure;
FIG. 7 is a schematic diagram of interference in a relative detection mode according to the disclosure;
FIG. 8 is another flowchart of a method for detecting pseudo GNSS interference according to the present disclosure;
FIG. 9 is another flowchart of a method for detecting pseudo GNSS interference according to the present disclosure;
FIG. 10 is a block diagram of an apparatus for detecting pseudo GNSS interference according to the present disclosure; and
FIG. 11 is a block diagram of a system for detecting pseudo GNSS interference according to the present disclosure.

## DETAILED DESCRIPTION

Embodiments of the present disclosure will be described in detail below with reference to the accompanying drawings. It should be noted that the embodiments of the disclosure and features herein may be combined with each other in any manner as long as they are not contradictory.

The steps illustrated in the flowchart of the drawings may be executed in a computer system such as a set of computer executable instructions. Further, although a logical order is shown in the flowchart, in some cases, the steps shown or described may be performed in a different order than illustrated herein.

Before describing the method for detecting pseudo GNSS interference according to the present disclosure, the principle of detecting pseudo GNSS interference according to the present disclosure is firstly explained.

Assuming that there are two nodes A and B, when node A and node B receive GNSS signals from the same satellite i at the same time, it is obtained that:

$$\Delta t_{AB} = \frac{\left(\rho_{i,A} - \rho_{i,B}\right) - \left(P_{i,A} - P_{i,B}\right) - \left(d_{i,A} - d_{i,B}\right) - \left(\varepsilon_{i,A} - \varepsilon_{i,B}\right)}{c} \quad (1)$$

$\Delta t_{AB}$ represents a time offset between node A and node B, $\rho_{i,A}$ represents a pseudo-random code ranging value of node A, $\rho_{i,B}$ represents a pseudo-random code ranging value of node B, $P_{i,A}$ represents a real geometric distance from node A to satellite i, $P_{i,B}$ represents a real geometric distance from node B to satellite i, $d_{i,A}$ represents delay of the satellite signal on a path to node A, $d_{i,B}$ represents delay of the satellite signal on a path to node B, $\varepsilon_{i,A}$ represents other errors of node A, $\varepsilon_{i,B}$ represents other errors of node B, and c represents the speed of light.

As can be seen from formula (1), the time offset between node A and node B normally fluctuates around a line, which is referred to as a fluctuation standard line. The fluctuation standard line may be obtained by averaging the time offsets between node A and node B over a long period of time or by other calculation means.

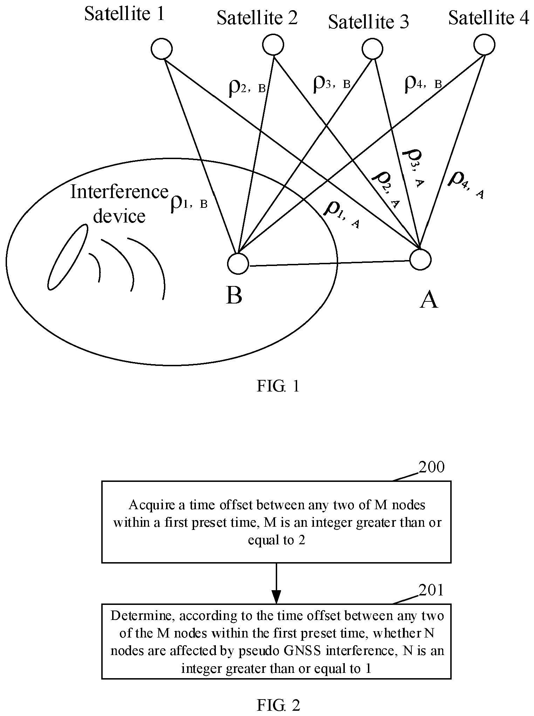

As shown in FIG. 1, when there is pseudo GNSS interference near node B, node B may receive wrong satellite signals, resulting in wrong pseudo range information, i.e., the pseudo range changes. Assuming that the pseudo range variation of node B is $\Delta\rho_{i,B}$, then $\rho_{i,B}$ in formula (1) changes to $(\rho_{i,B} + \Delta\rho_{i,B})$; and since node A is far away from node B and beyond the effective interference area, the data of node A remains unchanged. In this case, formula (1) is converted to formula (2).

$$\Delta t'_{AB} = \frac{\left(\rho_{i,A} - \rho_{i,B}\right) - \left(P_{i,A} - P_{i,B}\right) - \left(d_{i,A} - d_{i,B}\right) - \left(\varepsilon_{i,A} - \varepsilon_{i,B}\right)}{c} - \frac{\Delta\rho_{i,B}}{c} \quad (2)$$

$$\Delta t'_{AB} = \Delta t_{AB} - \frac{\Delta \rho_{i,B}}{c} \qquad (3)$$

As can be seen from formula (3), when the pseudo GNSS interference occurs and is stable, the fluctuation standard line is shifted from a normal fluctuation standard line by $\frac{\Delta \rho_{i,B}}{c}$ . Therefore, whether node B is affected by pseudo GNSS interference can be determined by judging whether the fluctuation standard line is shifted.

Referring to FIG. 2, a method for detecting pseudo GNSS interference according to the present disclosure includes steps 200 to 201.

At step 200, acquiring a time offset between any two of M nodes within a first preset time, where M is an integer greater than or equal to 2.

In the present disclosure, the step of acquiring the time offset between any two of M nodes within the first preset time may include the following three steps.

At a first step, receiving messages from the M nodes within the first preset time, respectively. Within the first preset time, messages from each node are continuously received, and each node continuously transmits messages, the message transmitted each time includes transmission detection data for the current time.

At a second step, parsing transmission detection data of each node from the message of the node. The transmission detection data includes data for calculating a time offset between two nodes, for example, a time when a satellite sends a GNSS signal, a satellite number, a time offset between a node and a satellite, or other data for calculating the time offset between the two nodes, and the present disclosure is not limited to any specific form of transmission detection data.

The time offset between a node and a satellite may be calculated according to formula $\Delta t_i = \frac{\rho_i - P_i - d_i - \varepsilon_i}{c}$ , where $\Delta t_i$ represent a time offset between the node and the satellite numbered i, $\rho_i$ represents a pseudo-random code ranging value of the node, $P_i$ represents a real geometric distance from the node to the satellite numbered i, $d_i$ represents delay of the satellite signal on a path to the node, $\varepsilon_i$ represents other errors of the node, and c represents the speed of light.

At a third step, calculating, according to the transmission detection data of any two nodes, the time offset between the two nodes. The time offset between the two nodes is a difference of respective time offsets of the two nodes from the satellite with the same satellite number. When the transmission detection data includes the time when multiple sets of satellites send GNSS signals, the satellite numbers, and the time offsets between the node and the satellites, a time offset between the two nodes corresponding to each set of data may be calculated first, and then the time offset between the two nodes may be calculated according to a predefined functional relationship. For example, the time offset between the two nodes is an average value or weighted average value of the time offsets between the two nodes corresponding to multiple sets of data, or the like.

At step 201, determining, according to the time offset between any two of the M nodes within the first preset time, whether N nodes are affected by pseudo GNSS interference, where N is an integer greater than or equal to 1.

In the present disclosure, the detection of pseudo GNSS interference may be implemented through any one of the following three methods.

First method: absolute detection mode

The absolute detection mode relates to detecting, by a detecting node carrying a satellite receiver, whether another detected node carrying a satellite receiver is affected by pseudo GNSS interference, i.e., the M nodes include the detecting node and the detected node, and the N nodes include the detected node.

The detecting node includes any one of: a trusted node, a node detected by the trusted node as not being affected by pseudo GNSS interference, a node that will not be affected by pseudo GNSS interference, at least one node with a higher priority than the detected node, and a node with a highest priority of the at least one node with a higher priority than the detected node.

The trusted node may include, for example, an absolute authority, such as the National Time Service Center, CAS, that will not be affected by pseudo GNSS interference.

In the present disclosure, whether N nodes are affected by pseudo GNSS interference is determined based on the time offset between any two nodes in the M nodes within the first preset time, which simply and effectively implement the detection of pseudo GNSS interference, and improves the Operation Administration and Maintenance (OAM) performance.

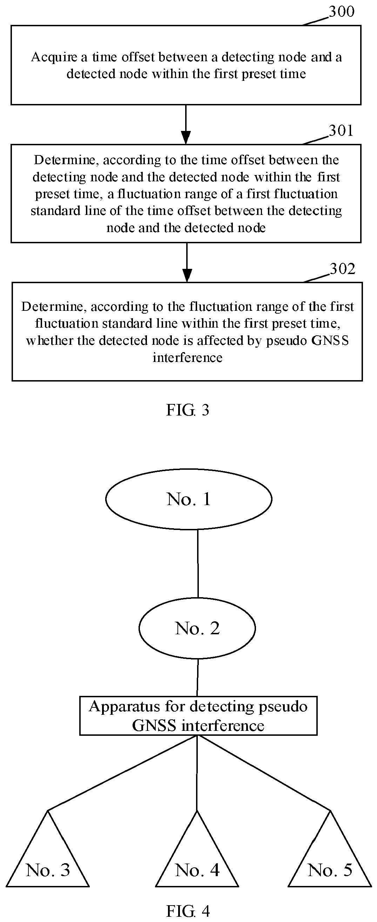

Referring to FIG. 3, the method includes steps 300 to 302.

At step 300, acquiring a time offset between the detecting node and the detected node within the first preset time.

In the present disclosure, the step of acquiring the time offset between the detecting node and the detected node within the first preset time may include the following three steps.

At a first step, receiving a message of the detecting node and a message of the detected node respectively within the first preset time. Messages of the detecting node and the detected node are continuously received within the first preset time, and the detecting node and the detected node continuously transmit messages within the first preset time, the message transmitted each time includes transmission detection data for the current time.

At a second step, parsing the transmission detection data of the detecting node from the message of the detecting node, and parsing the transmission detection data of the detected node from the message of the detected node. As described above, the transmission detection data includes data for calculating a time offset between two nodes, for example, a time when a satellite sends a GNSS signal, a satellite number, a time offset between a node and a satellite, or other data for calculating the time offset between the two nodes, and the present disclosure is not limited to any specific form of transmission detection data.

The time offset between a node and a satellite may be calculated according to formula $$\Delta t_i = \frac{\rho_i - P_i - d_i - \varepsilon_i}{c}$$, where $\Delta t_i$ represent a time offset between the node and the satellite numbered i, $\rho_i$ represents a pseudo-random code ranging value of the node, $P_i$ represents a real geometric distance from the node to the satellite numbered i, $d_i$ represents delay of the satellite signal on a path to the node, $\varepsilon_i$ represents other errors of the node, and c represents the speed of light.

At a third step, calculating, according to the transmission detection data of the detecting node and the transmission detection data of the detected node, a time offset between the detecting node and the detected node. The time offset between the two nodes is a difference of respective time offsets of the two nodes from the satellite with the same satellite number. When the transmission detection data includes the time when multiple sets of satellites send GNSS signals, the satellite numbers, and the time offsets between the node and the satellites, a time offset between the two nodes corresponding to each set of data may be calculated first, and then the time offset between the two nodes may be calculated according to a predefined functional relationship. For example, the time offset between the two nodes is an average value or weighted average value of the time offsets between the two nodes corresponding to multiple sets of data, or the like.

At step 301, determining, according to the time offset between the detecting node and the detected node within the first preset time, a fluctuation range of a first fluctuation standard line of the time offset between the detecting node and the detected node.

In the present disclosure, a fluctuation range of the time offset between the detecting node and the detected node within the first preset time may be set to the fluctuation range of the first fluctuation standard line of the time offset between the detecting node and the detected node, or the fluctuation range of the first fluctuation standard line of the time offset between the detecting node and the detected node may be set to be smaller than the fluctuation range of the time offset between the detecting node and the detected node within the first preset time. For example, if the fluctuation range of the time offset is -200 to 200 ns, the fluctuation standard line thereof is around 0, and since the time offset is too large, it is not appropriate to set the fluctuation range of the fluctuation standard line to -200 to 200 ns. At this time, it may be set to a smaller value, such as setting the fluctuation range of the fluctuation standard line to -15 to 15 ns.

At step 302, determining, according to the fluctuation range of the first fluctuation standard line within the first preset time, whether the detected node is affected by pseudo GNSS interference.

In the present disclosure, determining whether the detected node is affected by pseudo GNSS interference according to the fluctuation range of the first fluctuation standard line within the first preset time is based at least one of the following two criteria: determining that the detected node is affected by pseudo GNSS interference when the fluctuation range of the first fluctuation standard line within the first preset time is entirely out of a fluctuation range of a second fluctuation standard line; and determining that the detected node is not affected by pseudo GNSS interference when the fluctuation range of the first fluctuation standard line in part or all of the first preset time is within the fluctuation range of the second fluctuation standard line. The second fluctuation standard line refers to a fluctuation standard line of the time offset between the detecting node and the detected node within a second preset time under a condition that the detected node is not affected by pseudo GNSS interference.

In the present disclosure, an alarm of the detected node may be generated when it is determined that the detected node is affected by pseudo GNSS interference.

For example, as shown in FIG. 4, the first layer (the top layer) of the figure represents a trusted node device No. 1 at the National Time Service Center, CAS, located in Xi'an, the second layer is a node device No. 2 located in Shenzhen at which no pseudo GNSS interference is found after being detected by the above method for detecting pseudo GNSS interference, and which can also be regarded as a trusted node, and the third layer includes three base station node devices No. 3, No. 4 and No. 5 to be detected located in other different positions of Shenzhen.

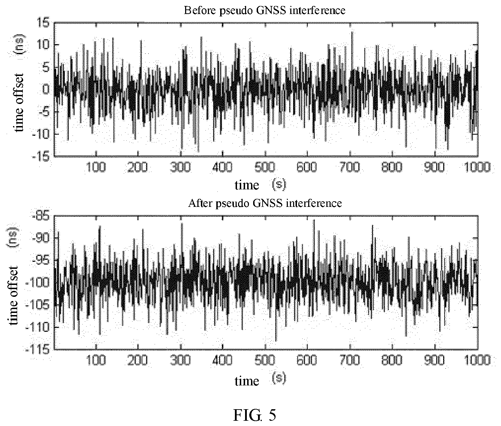

Under normal operating conditions, the time offset data will show itself in an apparatus for detecting pseudo GNSS interference. As shown in FIG. 5, it can be seen that the time offset for comparison forms a fluctuation standard line around 0, and oscillates within a range of $\pm$ 15 nanoseconds (ns). Therefore, a threshold range of the normal fluctuation standard line may be preset to -15 to 15 ns. Obviously, the threshold range may be set according to actual conditions and experience.

After receiving the time offset data, the apparatus for detecting pseudo GNSS interference calculates a value of the fluctuation standard line in real time, and then judges whether the value of the real-time fluctuation standard line is in a normal threshold range. When the value of the real-time fluctuation standard line is in the normal threshold range, the node is considered to be in a normal state and not affected by pseudo GNSS interference. When the value of the value of the real-time fluctuation standard line is not in the normal threshold range, if the real-time fluctuation standard line is finally stabilized around another value outside the normal threshold range, the node is considered to be affected by pseudo GNSS interference, and an alarm of the corresponding node is generated to notify a network manager or other processing department personnel that pseudo GNSS interference occurs at the node.

For example, when the base station node No. 3 is affected by pseudo GNSS interference, a pseudo range parsed from the satellite receiver will change. Assuming that a variation value of the pseudo range is $\Delta\rho = 30m$, the fluctuation standard line found in the apparatus for detecting pseudo GNSS interference is changed to

$$0 - \frac{\Delta\rho}{c} = -100ns$$

accordingly, and the fluctuation range of the time offset is changed to -85 to -115 ns, which exceeds the normal threshold range, and the fluctuation standard line is shifted by fixed -100 ns. When it is calculated that the abnormal fluctuation standard line exceeds a preset normal threshold range and the fluctuation standard line is finally stabilized around a certain value outside the normal threshold range, the apparatus for detecting pseudo GNSS interference generates an interference alarm and determines that pseudo GNSS interference exists near the base station node No. 3. Then the base station node No. 3 may further discard the received abnormal satellite data (i.e., data from an interfered satellite) and use normal satellite data for time service, or switch to a non-GNSS time service mode, such as PTP (precision time protocol) or other network time service modes.

Second method: relative detection mode

The relative detection mode relates to implementing detection of the M nodes through the time offset between any two of the M nodes within the first preset time.

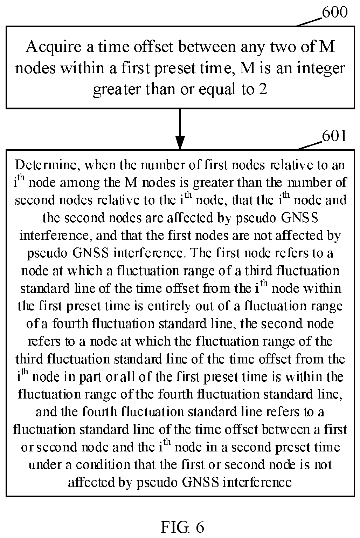

Referring to FIG. 6, the method includes steps 600 to 601.

At step 600, acquiring a time offset between any two of M nodes within a first preset time, where M is an integer greater than or equal to 2.

In the present disclosure, the step of acquiring the time offset between any two of M nodes within the first preset time may include the following three steps.

At a first step, receiving messages from the M nodes within the first preset time, respectively. Within the first preset time, messages from each node are continuously received, and each node continuously transmits messages, the message transmitted each time includes transmission detection data for the current time.

At a second step, parsing transmission detection data of each node from the message of the node. As described above, the transmission detection data includes data for calculating a time offset between two nodes, for example, a time when a satellite sends a GNSS signal, a satellite number, a time offset between a node and a satellite, or other data for calculating the time offset between the two nodes, and the present disclosure is not limited to any specific form of transmission detection data.

The time offset between a node and a satellite may be calculated according to formula

$$\Delta t_i = \frac{\rho_i - P_i - d_i - \varepsilon_i}{c}$$

, where $\Delta t_i$ represent a time offset between the node and the satellite numbered i, $\rho_i$ represents a pseudo-random code ranging value of the node, $P_i$ represents a real geometric distance from the node to the satellite numbered i, $d_i$ represents delay of the satellite signal on a path to the node, $\varepsilon_i$ represents other errors of the node, and c represents the speed of light.

At a third step, calculating, according to the transmission detection data of any two nodes, the time offset between the two nodes. The time offset between the two nodes is a difference of respective time offsets of the two nodes from the satellite with the same satellite number. When the transmission detection data includes the time when multiple sets of satellites send GNSS signals, the satellite numbers, and the time offsets between the node and the satellites, a time offset between the two nodes corresponding to each set of data may be calculated first, and then the time offset between the two nodes may be calculated according to a predefined functional relationship. For example, the time offset between the two nodes is an average value or weighted average value of the time offsets between the two nodes corresponding to multiple sets of data, or the like.

At step 601, determining, when the number of first nodes relative to an $i^{th}$ node among the M nodes is greater than the number of second nodes relative to the $i^{th}$ node, that the $i^{th}$ node and the second nodes are affected by pseudo GNSS interference, and that the first nodes are not affected by pseudo GNSS interference. The first node refers to a node at which a fluctuation range of a third fluctuation standard line of the time offset from the $i^{th}$ node within the first preset time is entirely out of a fluctuation range of a fourth fluctuation standard line, the second node refers to a node at which the fluctuation range of the third fluctuation standard line of the time offset from the $i^{th}$ node in part or all of the first preset time is within the fluctuation range of the fourth fluctuation standard line, and the fourth fluctuation standard line refers to a fluctuation standard line of the time offset between a first or second node and the $i^{th}$ node in a second preset time under a condition that the first or second node is not affected by pseudo GNSS interference.

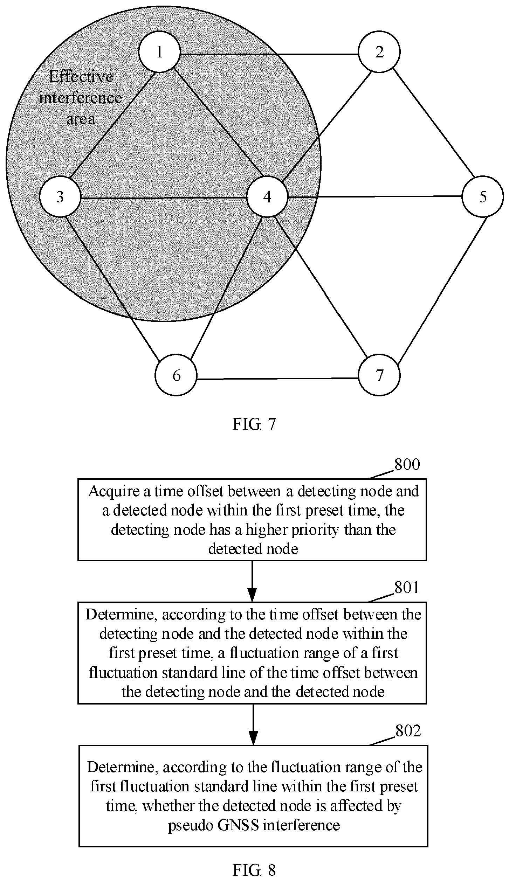

For example, as shown in FIG. 7, detection of pseudo GNSS interference may be performed on node 4 and surrounding nodes 1, 2, 3, 5, 6 and 7 simultaneously. When pseudo GNSS interference exists in an area formed by node 1, node 3 and node 4 and affects the three nodes, it can be obtained from the apparatus for detecting pseudo GNSS interference that the fluctuation ranges of the third fluctuation standard lines between node 4 and nodes 2, 5, 6 and 7 respectively within the first preset time are beyond the fluctuation range of the fourth fluctuation standard line, while the fluctuation ranges of the third fluctuation standard lines between node 4 and nodes 1 and 3 respectively within the first preset time are in the fluctuation range of the fourth fluctuation standard line. At this time, for node 4, the apparatus for detecting pseudo GNSS interference will determine that node 4 is affected by pseudo GNSS interference based on a fact that the number of first nodes (including nodes 2, 5, 6 and 7) is greater than the number of second nodes (including nodes 1 and 3), and nodes 1 and 3, which appear normal compared with node 4, are very likely to be affected by the same pseudo GNSS interference source at the same time.

Third method: priority detection mode

The priority detection mode relates to presetting a priority of each node according to a position and a state of the node, and priorities of nodes are ranked according to the difficulty of being affected by pseudo GNSS interference, i.e., the less likely the node is to be affected by pseudo GNSS interference, the higher the priority of the node is. A node in a clear space with more receivable satellites and less manual activities may be set to a higher priority; otherwise, the node may be set to a lower priority. When pseudo GNSS interference detection is carried out on a detected node, a node with a higher priority may be used in the apparatus for detecting pseudo GNSS interference, or a plurality of high-priority nodes may be used to detect at the same time to judge whether the detected node is affected by pseudo GNSS interference according to the priority level and a corresponding algorithm.

A specific feasible detection mode of the third method of priority detection mode may be the same as the specific detection mode of the first method of absolute detection mode. In the third method, the detecting node may be any one of at least one node with a higher priority than the detected node.

Referring to FIG. 8, the method includes steps 800 to 802.

At step 800, acquiring a time offset between the detecting node and the detected node within the first preset time, where the detecting node has a higher priority than the detected node.

In the present disclosure, the step of acquiring the time offset between the detecting node and the detected node within the first preset time may include the following three steps.

At a first step, receiving a message of the detecting node and a message of the detected node respectively within the first preset time. Messages of the detecting node and the detected node are continuously received within the first preset time, and the detecting node and the detected node continuously transmit messages within the first preset time, the message transmitted each time includes transmission detection data for the current time.

At a second step, parsing the transmission detection data of the detecting node from the message of the detecting node, and parsing the transmission detection data of the detected node from the message of the detected node. As described above, the transmission detection data includes data for calculating a time offset between two nodes, for example, a time when a satellite sends a GNSS signal, a satellite number, a time offset between a node and a satellite, or other data for calculating the time offset between the two nodes, and the present disclosure is not limited to any specific form of transmission detection data.

$$\Delta t_i = \frac{\rho_i - P_i - d_i - \varepsilon_i}{c}$$

The time offset between a node and a satellite may be calculated according to formula , where $\Delta t_i$ represent a time offset between the node and the satellite numbered i, $\rho_i$ represents a pseudo-random code ranging value of the node, $P_i$ represents a real geometric distance from the node to the satellite numbered i, $d_i$ represents

delay of the satellite signal on a path to the node, $\varepsilon_i$ represents other errors of the node, and c represents the speed of light.

At a third step, calculating, according to the transmission detection data of the detecting node and the transmission detection data of the detected node, a time offset between the detecting node and the detected node. The time offset between the two nodes is a difference of respective time offsets of the two nodes from the satellite with the same satellite number. When the transmission detection data includes the time when multiple sets of satellites send GNSS signals, the satellite numbers, and the time offsets between the node and the satellites, a time offset between the two nodes corresponding to each set of data may be calculated first, and then the time offset between the two nodes may be calculated according to a predefined functional relationship. For example, the time offset between the two nodes is an average value or weighted average value of the time offsets between the two nodes corresponding to multiple sets of data, or the like.

In the present disclosure, the detecting node may be any node with a higher priority than the detected node. For example, the detecting node may be a node with a highest priority of the at least one node with a higher priority than the detected node.

At step 801, determining, according to the time offset between the detecting node and the detected node within the first preset time, a fluctuation range of a first fluctuation standard line of the time offset between the detecting node and the detected node.

In the present disclosure, a fluctuation range of the time offset between the detecting node and the detected node within the first preset time may be set to the fluctuation range of the first fluctuation standard line of the time offset between the detecting node and the detected node, or the fluctuation range of the first fluctuation standard line of the time offset between the detecting node and the detected node may be set to be smaller than the fluctuation range of the time offset between the detecting node and the detected node within the first preset time. For example, if the fluctuation range of the time offset is -200 to 200 ns, the fluctuation standard line thereof is around 0, and since the time offset is too large, it is not appropriate to set the fluctuation range of the fluctuation standard line to -200 to 200 ns. At this time, it may be set to a smaller value, such as setting the fluctuation range of the fluctuation standard line to -15 to 15 ns.

At step 802, determining, according to the fluctuation range of the first fluctuation standard line within the first preset time, whether the detected node is affected by pseudo GNSS interference.

In the present disclosure, determining whether the detected node is affected by pseudo GNSS interference according to the fluctuation range of the first fluctuation standard line within the first preset time is based at least one of the following two criteria: determining that the detected node is affected by pseudo GNSS interference when the fluctuation range of the first fluctuation standard line within the first preset time is entirely out of a fluctuation range of a second fluctuation standard line; and determining that the detected node is not affected by pseudo GNSS interference when the fluctuation range of the first fluctuation standard line in part or all of the first preset time is within the fluctuation range of the second fluctuation standard line. The second fluctuation standard line refers to a fluctuation standard line of the time offset between the detecting node and the detected node within a second preset time under a condition that the detected node is not affected by pseudo GNSS interference.

Another specific feasible detection mode of the third method of priority detection mode may be the same as the specific detection mode of the second method of relative detection mode. In the third method, the detecting node may be at least one node with a higher priority than the detected node.

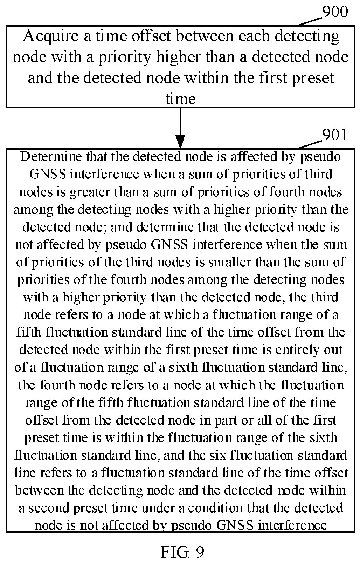

Referring to FIG. 9, the method includes steps 900 to 901.

At step 900, acquiring a time offset between each detecting node with a priority higher than a detected node and the detected node within the first preset time.

In the present disclosure, acquiring the time offset between each detecting node with a priority higher than the detected node and the detected node within the first preset time includes the following three steps.

At a first step, receiving messages from each node within the first preset time. Within the first preset time, messages from each node are continuously received, and each node continuously transmits messages, the message transmitted each time includes transmission detection data for the current time.

At a second step, parsing transmission detection data of each node from the message of the node. As described above, the transmission detection data includes data for calculating a time offset between two nodes, for example, a time when a satellite sends a GNSS signal, a satellite number, a time offset between a node and a satellite, or other data for calculating the time offset between the two nodes, and the present disclosure is not limited to any specific form of transmission detection data.

The time offset between a node and a satellite may be calculated according to formula
$$\Delta t_i = \frac{\rho_i - P_i - d_i - \varepsilon_i}{c}$$
, where $\Delta t_i$ represent a time offset between the node and the satellite numbered i, $\rho_i$ represents a pseudo-random code ranging value of the node, $P_i$ represents a real geometric distance from the node to the satellite numbered i, $d_i$ represents delay of the satellite signal on a path to the node, $\varepsilon_i$ represents other errors of the node, and c represents the speed of light.

At a third step, calculating, according to the transmission detection data of the detecting node and the transmission detection data of the detected node, a time offset between the detecting node and the detected node. The time offset between the two nodes is a difference of respective time offsets of the two nodes from the satellite with the same satellite number. When the transmission detection data includes the time when multiple sets of satellites send GNSS signals, the satellite numbers, and the time offsets between the node and the satellites, a time offset between the two nodes corresponding to each set of data may be calculated first, and then the time offset between the two nodes may be calculated according to a predefined functional relationship. For example, the time offset between the two nodes is an average value or weighted average value of the time offsets between the two nodes corresponding to multiple sets of data, or the like.

At step 901, determining that the detected node is affected by pseudo GNSS interference when a sum of priorities of third nodes is greater than a sum of priorities of fourth nodes among the detecting nodes with a higher priority than the detected node; and determining that the detected node is not affected by pseudo GNSS interference when the sum of priorities of the third nodes is smaller than the sum of priorities of the fourth nodes among the detecting nodes with a higher priority than the detected node. The third node refers to a node at which a fluctuation range of a fifth fluctuation standard line of the time offset from the detected node within the first preset time is entirely out of a fluctuation range of a sixth fluctuation standard line, the fourth node refers to a node at which the fluctuation range of the fifth fluctuation standard line of the time offset from the detected node in part or all of the first preset time is within the fluctuation range of the sixth fluctuation standard line, and the six fluctuation standard line refers to a fluctuation standard line of the time offset between the detecting node and the detected node within a second preset time under a condition that the detected node is not affected by pseudo GNSS interference.

For example, numbers 1 to 9 represent priorities, number 9 represents the highest priority, and there are five nodes around the detected node to be detected, which have priorities of 9, 8, 8, 6 and 1, respectively. If the priority of the detected node is 5, the nodes available for detection are the four nodes with priorities of 9, 8, 8 and 6. If the results of judging whether the detected node is affected by GNSS interference at the four nodes are yes, no, yes and no, respectively, it is determined that the sum of priorities of the detected nodes affected by GNSS interference is 9+8=17, and the sum of priorities of the detected nodes not affected by GNSS interference is 8+6=14. As a result, it is considered that the detected node is affected by GNSS interference.

Obviously, there are many other feasible manners for determining whether the detected node is affected by pseudo GNSS interference according to the priority level and a corresponding algorithm, and all of which are within the protection scope of the present disclosure and are not listed one by one here.

In the present disclosure, an alarm of the detected node may be generated when it is determined that the detected node is affected by pseudo GNSS interference.

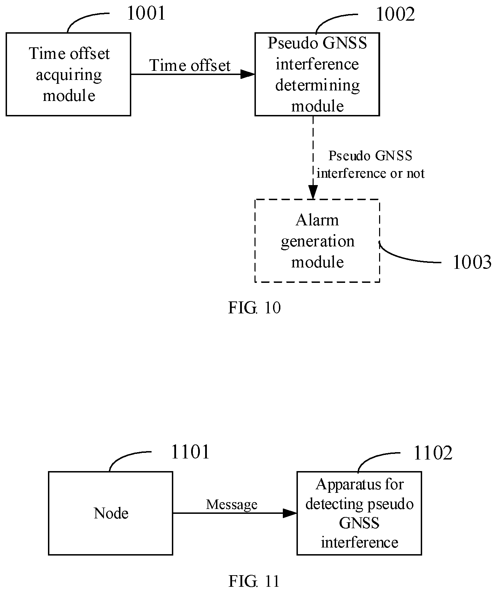

Referring to FIG. 10, the present disclosure proposes an apparatus for detecting pseudo GNSS interference, including a time offset acquiring module 1001 and a pseudo GNSS interference determining module 1002.

The time offset acquiring module 1001 is configured to acquire a time offset between any two of M nodes within a first preset time, where M is an integer greater than or equal to 2.

The pseudo GNSS interference determining module 1002 is configured to determine, according to the time offset between any two of the M nodes within the first preset time, whether N nodes are affected by pseudo GNSS interference, where N is an integer greater than or equal to 1.

In the present disclosure, the time offset acquiring module 1001 may be configured to perform the following three steps.

At a first step, receiving messages from the M nodes within the first preset time, respectively. Within the first preset time, messages from each node are continuously received, and each node continuously transmits messages, the message transmitted each time includes transmission detection data for the current time.

At a second step, parsing transmission detection data of each node from the message of the node. As described above, the transmission detection data includes data for calculating a time offset between two nodes, for example, a time when a satellite sends a GNSS signal, a satellite number, a time offset between a node and a satellite, or other data for calculating the time offset between the two nodes, and the present disclosure is not limited to any specific form of transmission detection data.

The time offset between a node and a satellite may be calculated according to formula $\Delta t_i = \dfrac{\rho_i - P_i - d_i - \varepsilon_i}{c}$, where $\Delta t_i$ represent a time offset between the node and the satellite numbered i, $\rho_i$ represents a pseudo-random code ranging value of the node, $P_i$ represents a real geometric distance from the node to the satellite numbered i, $d_i$ represents delay of the satellite signal on a path to the node, $\varepsilon_i$ represents other errors of the node, and c represents the speed of light.

At a third step, calculating, according to the transmission detection data of any two nodes, the time offset between the two nodes. The time offset between the two nodes is a difference of respective time offsets of the two nodes from the satellite with the same satellite number. When the transmission detection data includes the time when multiple sets of satellites send GNSS signals, the satellite numbers, and the time offsets between the node and the satellites, a time offset between the two nodes corresponding to each set of data may be calculated first, and then the time offset between the two nodes may be calculated according to a predefined functional relationship. For example, the time offset between the two nodes is an average value or weighted average value of the time offsets between the two nodes corresponding to multiple sets of data, or the like.

In the present disclosure, the time offset acquiring module 1001 and the pseudo GNSS interference determining module 1002 may implement detection of the pseudo GNSS interference through any one of the following three methods.

First method: absolute detection mode

The absolute detection mode relates to detecting, by a detecting node carrying a satellite receiver, whether another detected node carrying a satellite receiver is affected by pseudo GNSS interference, i.e., the M nodes include the detecting node and the detected node, and the N nodes include the detected node.

The detecting node includes any one of: a trusted node, a node detected by the trusted node as not being affected by pseudo GNSS interference, a node that will not be affected by pseudo GNSS interference, at least one node with a higher priority than the detected node, and a node with a highest priority of the at least one node with a higher priority than the detected node.

The trusted node may include, for example, an absolute authority, such as the National Time Service Center, CAS, that will not be affected by pseudo GNSS interference.

The time offset acquiring module 1001 may be configured to acquire a time offset between the detecting node and the detected node within the first preset time, and the pseudo GNSS interference determining module 1002 may be configured to: determine, according to the time offset between the detecting node and the detected node within the first preset time, a fluctuation range of a first fluctuation standard line of the time offset between the detecting node and the detected node; and determine, according to the fluctuation range of the first fluctuation standard line within the first preset time, whether the detected node is affected by pseudo GNSS interference.

In the present disclosure, the time offset acquiring module 1001 may be configured to perform the following three steps.

At a first step, receiving a message of the detecting node and a message of the detected node respectively within the first preset time. Messages of the detecting node and the detected node are continuously received within the first preset time, and the detecting node and the detected node continuously transmit messages within the first preset time, the message transmitted each time includes transmission detection data for the current time.

At a second step, parsing the transmission detection data of the detecting node from the message of the detecting node, and parsing the transmission detection data of the detected node from the message of the detected node. As described above, the transmission detection data includes data for calculating a time offset between two nodes, for example, a time when a satellite sends a GNSS signal, a satellite number, a time offset between a node and a satellite, or other data for calculating the time offset between the two nodes, and the embodiment of the present disclosure is not limited to any specific form of transmission detection data.

The time offset between a node and a satellite may be calculated according to formula

$$\Delta t_i = \frac{\rho_i - P_i - d_i - \varepsilon_i}{c}$$

, where $\Delta t_i$ represent a time offset between the node and the satellite numbered i, $\rho_i$ represents a pseudo-random code ranging value of the node, $P_i$ represents a real geometric distance from the node to the satellite numbered i, $d_i$ represents delay of the satellite signal on a path to the node, $\varepsilon_i$ represents other errors of the node, and c represents the speed of light.

At a third step, calculating, according to the transmission detection data of the detecting node and the transmission detection data of the detected node, a time offset between the detecting node and the detected node. The time offset between the two nodes is a difference of respective time offsets of the two nodes from the satellite with the same satellite number. When the transmission detection data includes the time when multiple sets of satellites send GNSS signals, the satellite numbers, and the time offsets between the node and the satellites, a time offset between the two nodes corresponding to each set of data may be calculated first, and then the time offset between the two nodes may be calculated according to a predefined functional relationship. For example, the time offset between the two nodes is an average value or weighted average value of the time offsets between the two nodes corresponding to multiple sets of data, or the like.

In the present disclosure, the pseudo GNSS interference determining module 1002 may determine, according to the fluctuation range of the first fluctuation standard line within the first preset time, whether the detected node is affected by pseudo GNSS interference through at least one of: determining that the detected node is affected by pseudo GNSS interference when the fluctuation range of the first fluctuation standard line within the first preset time is entirely out of a fluctuation range of a second fluctuation standard line; and determining that the detected node is not affected by pseudo GNSS interference when the fluctuation range of the first fluctuation standard line in part or all of the first preset time is within the fluctuation range of the second fluctuation standard line. The second fluctuation standard line refers to a fluctuation standard line of the time offset between the detecting node and the detected node within a second preset time under a condition that the detected node is not affected by pseudo GNSS interference.

In the present disclosure, the apparatus for detecting pseudo GNSS interference further includes an alarm generation module 1003 configured to generate an alarm of the detected node when it is determined that the detected node is affected by pseudo GNSS interference.

Second method: relative detection mode

The relative detection mode relates to implementing detection of the M nodes through the time offset between any two of the M nodes within the first preset time.

The pseudo GNSS interference determining module 1002 may be configured to: determining, when the number of first nodes relative to an $i^{th}$ node among the M nodes is greater than the number of second nodes relative to the $i^{th}$ node, that the $i^{th}$ node and the second nodes are affected by pseudo GNSS interference, and that the first nodes are not affected by pseudo GNSS interference. The first node refers to a node at which a fluctuation range of a third fluctuation standard line of the time offset from the $i^{th}$ node within the first preset time is entirely out of a fluctuation range of a fourth fluctuation standard line, the second node refers to a node at which the fluctuation range of the third fluctuation standard line of the time offset from the $i^{th}$ node in part or all of the first preset time is within the fluctuation range of the fourth fluctuation standard line, and the fourth fluctuation standard line refers to a fluctuation standard line of the time offset between a first or second node and the $i^{th}$ node in a second preset time under a condition that the first or second node is not affected by pseudo GNSS interference.

For example, as shown in FIG. 7, detection of pseudo GNSS interference may be performed on node 4 and surrounding nodes 1, 2, 3, 5, 6 and 7 simultaneously. When pseudo GNSS interference exists in an area formed by node 1, node 3 and node 4 and affects the three nodes, it can be obtained from the apparatus for detecting pseudo GNSS interference that the fluctuation ranges of the third fluctuation standard lines between node 4 and nodes 2, 5, 6 and 7 respectively within the first preset time are beyond the fluctuation range of the fourth fluctuation standard line, while the fluctuation ranges of the third fluctuation standard lines between node 4 and nodes 1 and 3 respectively within the first preset time are in the fluctuation range of the fourth fluctuation standard line. At this time, for node 4, the apparatus for detecting pseudo GNSS interference will determine that node 4 is affected by pseudo GNSS interference based on a fact that the number of first nodes (including nodes 2, 5, 6 and 7) is greater than the number of second nodes (including nodes 1 and 3), and nodes 1 and 3, which appear normal compared with node 4, are very likely to be affected by the same pseudo GNSS interference source at the same time.

Third method: priority detection mode

The priority detection mode relates to presetting a priority of each node according to a position and a state of the node, and priorities of nodes are ranked according to the difficulty of being affected by pseudo GNSS interference, i.e., the less likely the node is to be affected by pseudo GNSS interference, the higher the priority of the node is. A node in a clear space with more receivable satellites and less manual activities may be set to a higher priority; otherwise, the node may be set to a lower priority. When pseudo GNSS interference detection is carried out on a detected node, a node with a higher priority may be used in the apparatus for detecting pseudo GNSS interference, or a plurality of high-priority nodes may be used to detect at the same time to judge whether the detected node is affected by pseudo GNSS interference according to the priority level and a corresponding algorithm.

A specific feasible detection mode of the third method of priority detection mode may be the same as the specific detection mode of the first method of absolute detection mode. In the third method, the detecting node may be any one of at least one node with a higher priority than the detected node.

Another specific feasible detection mode of the third method of priority detection mode may be the same as the specific detection mode of the second method of relative detection mode. In the third method, the detecting node may be at least one node with a higher priority than the detected node.

In the present disclosure, the time offset acquiring module 1001 may be configured to acquire a time offset between each detecting node with a priority higher than a detected node and the detected node within the first preset time.

The pseudo GNSS interference determining module 1002 may be configured to: determine that the detected node is affected by pseudo GNSS interference when a sum of priorities of third nodes is greater than a sum of priorities of fourth nodes among the detecting nodes with a higher priority than the detected node; and determine that the detected node is not affected by pseudo GNSS interference when the sum of priorities of the third nodes is smaller than the sum of priorities of the fourth nodes among the detecting nodes with a higher priority than the detected node. The third node refers to a node at which a fluctuation range of a fifth fluctuation standard line of the time offset from the detected node within the first preset time is entirely out of a fluctuation range of a sixth fluctuation standard line, the fourth node refers to a node at which the fluctuation range of the fifth fluctuation standard line of the time offset from the detected node in part or all of the first preset time is within the fluctuation range of the sixth fluctuation standard line, and the six fluctuation standard line refers to a fluctuation standard line of the time offset between the detecting node and the detected node within a second preset time under a condition that the detected node is not affected by pseudo GNSS interference.

In the present disclosure, there is provided an apparatus for detecting pseudo GNSS interference, including a processor, and a computer readable storage medium having instructions stored thereon which, when executed by the processor, causes the processor to implement any one of the above methods for detecting pseudo GNSS interference.

In the present disclosure, there is provided a computer readable storage medium having a computer program stored thereon which, when executed by a processor, causes the processor to implement any one of the above methods for detecting pseudo GNSS interference.

Referring to FIG. 11, the present disclosure proposes a system for detecting pseudo GNSS interference, including M nodes 1101 and an apparatus for detecting pseudo GNSS interference 1102.

The apparatus for detecting pseudo GNSS interference 1102 is configured to: acquire a time offset between any two of M nodes within a first preset time, where M is an integer greater than or equal to 2; and determine, according to the time offset between any two of the M nodes within the first preset time, whether N nodes are affected by pseudo GNSS interference, where N is an integer greater than or equal to 1.

In the present disclosure, the apparatus for detecting pseudo GNSS interference 1102 may be a stand-alone node, or may be disposed in any one of the M nodes 1101.

In the present disclosure, the apparatus for detecting pseudo GNSS interference 1102 may acquire the time offset between any two of the M nodes within the first preset time through the following three steps.

At a first step, receiving messages from the M nodes within the first preset time, respectively. Within the first preset time, messages from each node are continuously received, and each node continuously transmits messages, the message transmitted each time includes transmission detection data for the current time.

At a second step, parsing transmission detection data of each node from the message of the node. As described above, the transmission detection data includes data for calculating a time offset between two nodes, for example, a time when a satellite sends a GNSS signal, a satellite number, a time offset between a node and a satellite, or other data for calculating the time offset between the two nodes, and the present disclosure is not limited to any specific form of transmission detection data.

The time offset between a node and a satellite may be calculated according to formula

$$\Delta t_i = \frac{\rho_i - P_i - d_i - \varepsilon_i}{c}$$

, where $\Delta t_i$ represent a time offset between the node and the satellite numbered i, $\rho_i$ represents a pseudo-random code ranging value of the node, $P_i$ represents a real geometric distance from the node to the satellite numbered i, $d_i$ represents delay of the satellite signal on a path to the node, $\varepsilon_i$ represents other errors of the node, and c represents the speed of light.

At a third step, calculating, according to the transmission detection data of any two nodes, the time offset between the two nodes. The time offset between the two nodes is a difference of respective time offsets of the two nodes from the satellite with the same satellite number. When the transmission detection data includes the time when multiple sets of satellites send GNSS signals, the satellite numbers, and the time offsets between the node and the satellites, a time offset between the two nodes corresponding to each set of data may be calculated first, and then the time offset between the two nodes may be calculated according to a predefined functional relationship. For example, the time offset between the two nodes is an average value or weighted average value of the time offsets between the two nodes corresponding to multiple sets of data, or the like.

In the present disclosure, the apparatus for detecting pseudo GNSS interference 1102 may implement the detection of pseudo GNSS interference through any one of the following three methods.

First method: absolute detection mode

The absolute detection mode relates to the apparatus for detecting pseudo GNSS interference 1102 detecting, by a detecting node carrying a satellite receiver, whether another detected node carrying a satellite receiver is affected by pseudo GNSS interference, i.e., the M nodes include the detecting node and the detected node, and the N nodes include the detected node.

The detecting node includes any one of: a trusted node, a node detected by the trusted node as not being affected by pseudo GNSS interference, a node that will not be affected by pseudo GNSS interference, at least one node with a higher priority than the detected node, and a node with a highest priority of the at least one node with a higher priority than the detected node.

The trusted node may include, for example, an absolute authority, such as the National Time Service Center, CAS, that will not be affected by pseudo GNSS interference.

The apparatus for detecting pseudo GNSS interference 1102 may be configured to: acquire a time offset between the detecting node and the detected node within the first preset time; determine, according to the time offset between the detecting node and the detected node within the first preset time, a fluctuation range of a first fluctuation standard line of the time offset between the detecting node and the detected node; and determine, according to the fluctuation range of the first fluctuation standard line within the first preset time, whether the detected node is affected by pseudo GNSS interference.

In the present disclosure, the apparatus for detecting pseudo GNSS interference 1102 may acquire the time offset between any two of the M nodes within the first preset time through the following three steps.

At a first step, receiving a message of the detecting node and a message of the detected node respectively within the first preset time. Messages of the detecting node and the detected node are continuously received within the first preset time, and the detecting node and the detected node continuously transmit messages within the first preset time, the message transmitted each time includes transmission detection data for the current time.

At a second step, parsing the transmission detection data of the detecting node from the message of the detecting node, and parsing the transmission detection data of the detected node from the message of the detected node. As described above, the transmission detection data includes data for calculating a time offset between two nodes, for example, a time when a satellite sends a GNSS signal, a satellite number, a time offset between a node and a satellite, or other data for calculating the time offset between the two nodes, and the embodiment of the present disclosure is not limited to any specific form of transmission detection data.

$$\Delta t_i = \frac{\rho_i - P_i - d_i - \varepsilon_i}{c}$$

The time offset between a node and a satellite may be calculated according to formula , where $\Delta t_i$ represent a time offset between the node and the satellite numbered i, $\rho_i$ represents a pseudo-random code ranging value of the node, $P_i$ represents a real geometric distance from the node to the satellite numbered i, $d_i$ represents delay of the satellite signal on a path to the node, $\varepsilon_i$ represents other errors of the node, and c represents the speed of light.

At a third step, calculating, according to the transmission detection data of the detecting node and the transmission detection data of the detected node, a time offset between the detecting node and the detected node. The time offset between the two nodes is a difference of respective time offsets of the two nodes from the satellite with the same satellite number. When the transmission detection data includes the time when multiple sets of satellites send GNSS signals, the satellite numbers, and the time offsets between the node and the satellites, a time offset between the two nodes corresponding to each set of data may be calculated first, and then the time offset between the two nodes may be calculated according to a predefined functional relationship. For example, the time offset between the two nodes is an average value or weighted average value of the time offsets between the two nodes corresponding to multiple sets of data, or the like.

In the present disclosure, the apparatus for detecting pseudo GNSS interference 1102 may determine, according to the fluctuation range of the first fluctuation standard line within the first preset time, whether the detected node is affected by pseudo GNSS interference through at least one of: determining that the detected node is affected by pseudo GNSS interference when the fluctuation range of the first fluctuation standard line within the first preset time is entirely out of a fluctuation range of a second fluctuation standard line; and determining that the detected node is not affected by pseudo GNSS interference when the fluctuation range of the first fluctuation standard line in part or all of the first preset time is within the fluctuation range of the second fluctuation standard line. The second fluctuation standard line refers to a fluctuation standard line of the time offset between the detecting node and the detected node within a second preset time under a condition that the detected node is not affected by pseudo GNSS interference.

In the present disclosure, the apparatus for detecting pseudo GNSS interference 1102 may be further configured to: generate an alarm of the detected node when it is determined that the detected node is affected by pseudo GNSS interference.

Second method: relative detection mode

The relative detection mode relates to the apparatus for detecting pseudo GNSS interference 1102 implementing detection of the M nodes through the time offset between any two of the M nodes within the first preset time.

The apparatus for detecting pseudo GNSS interference 1102 may determine, according to the time offset between any two of the M nodes within the first preset time, whether N nodes are affected by pseudo GNSS interference by at least one of: determining, when the number of first nodes relative to an $i^{th}$ node among the M nodes is greater than the number of second nodes relative to the $i^{th}$ node, that the $i^{th}$ node and the second nodes are affected by pseudo GNSS interference, and that the first nodes are not affected by pseudo GNSS interference. The first node refers to a node at which a fluctuation range of a third fluctuation standard line of the time offset from the $i^{th}$ node within the first preset time is entirely out of a fluctuation range of a fourth fluctuation standard line, the second node refers to a node at which the fluctuation range of the third fluctuation standard line of the time offset from the $i^{th}$ node in part or all of the first preset time is within the fluctuation range of the fourth fluctuation standard line, and the fourth fluctuation standard line refers to a fluctuation standard line of the time offset between a first or second node and the $i^{th}$ node in a second preset time under a condition that the first or second node is not affected by pseudo GNSS interference.

For example, as shown in FIG. 7, detection of pseudo GNSS interference may be performed on node 4 and surrounding nodes 1, 2, 3, 5, 6 and 7 simultaneously. When pseudo GNSS interference exists in an area formed by node 1, node 3 and node 4 and affects the three nodes, it can be obtained from the apparatus for detecting pseudo GNSS interference that the fluctuation ranges of the third fluctuation standard lines between node 4 and nodes 2, 5, 6 and 7 respectively within the first preset time are beyond the fluctuation range of the fourth fluctuation standard line, while the fluctuation ranges of the third fluctuation standard lines between node 4 and nodes 1 and 3 respectively within the first preset time are in the fluctuation range of the fourth fluctuation standard line. At this time, for node 4, the apparatus for detecting pseudo GNSS interference will determine that node 4 is affected by pseudo GNSS interference based on a fact that the number of first nodes (including nodes 2, 5, 6 and 7) is greater than the number of second nodes (including nodes 1 and 3), and nodes 1 and 3, which appear normal compared with node 4, are very likely to be affected by the same pseudo GNSS interference source at the same time.

Third method: priority detection mode

The priority detection mode relates to the apparatus for detecting pseudo GNSS interference 1102 presetting a priority of each node according to a position and a state of the node, and priorities of nodes are ranked according to the difficulty of being affected by pseudo GNSS interference, i.e., the less likely the node is to be affected by pseudo GNSS interference, the higher the priority of the node is. A node in a clear space with more receivable satellites and less manual activities may be set to a higher priority; otherwise, the node may be set to a lower priority. When pseudo GNSS interference detection is carried out on a detected node, a node with a higher priority may be used in the apparatus for detecting pseudo GNSS interference, or a plurality of high-priority nodes may be used to detect at the same time to judge whether the detected node is affected by pseudo GNSS interference according to the priority level and a corresponding algorithm.

A specific feasible detection mode of the third method of priority detection mode may be the same as the specific detection mode of the first method of absolute detection mode. In the third method, the detecting node may be any one of at least one node with a higher priority than the detected node.

Another specific feasible detection mode of the third method of priority detection mode may be the same as the specific detection mode of the second method of relative detection mode. In the third method, the detecting node may be at least one node with a higher priority than the detected node.

In the present disclosure, the apparatus for detecting pseudo GNSS interference may be configured to: acquire a time offset between each detecting node with a priority higher than a detected node and the detected node within the first preset time; determine that the detected node is affected by pseudo GNSS interference when a sum of priorities of third nodes is greater than a sum of priorities of fourth nodes among the detecting nodes with a higher priority than the detected node; and determine that the detected node is not affected by pseudo GNSS interference when the sum of priorities of the third nodes is smaller than the sum of priorities of the fourth nodes among the detecting nodes with a higher priority than the detected node. The third node refers to a node at which a fluctuation range of a fifth fluctuation standard line of the time offset from the detected node within the first preset time is entirely out of a fluctuation range of a sixth fluctuation standard line, the fourth node refers to a node at which the fluctuation range of the fifth fluctuation standard line of the time offset from the detected node in part or all of the first preset time is within the fluctuation range of the sixth fluctuation standard line, and the six fluctuation standard line refers to a fluctuation standard line of the time offset between the detecting node and the detected node within a second preset time under a condition that the detected node is not affected by pseudo GNSS interference.

Those of ordinary skill in the art will appreciate that all or some steps of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or step may be performed cooperatively by several physical components. Some or all components may be implemented as software executed by a processor, such as a digital signal processor or microprocessor, or implemented as hardware, or implemented as an integrated circuit, such as an application specific integrated circuit. Such software may be distributed on a computer-readable medium which may include a computer storage medium (or non-transitory medium). As is well known to those of ordinary skill in the art, the term computer storage medium includes volatile and nonvolatile, removable and non-removable medium implemented in any method or technology for storing information, such as computer-readable instructions, data structures, program modules or other data. A computer storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer.

Despite the implementations disclosed in the embodiments of the present disclosure as described above, they are merely implementations used to facilitate the understanding of the embodiments of the present disclosure, and are not intended to limit the embodiments of the present disclosure. Modifications and variations in the form and details of the embodiments of the disclosure can be made by any person skilled in the art of the present disclosure without departing from the scope disclosed by the embodiments of the disclosure. However, the scope of protection of the embodiments of the disclosure is defined by the scope of the appended claims.

**Claims**

1. A computer-implemented method for detecting pseudo Global Navigation Satellite System, called GNSS, interference, which is **characterized in that**:

   acquiring (200) a time offset between any two of M nodes within a first preset time, wherein M is an integer greater than or equal to 2; and
   determining (201), according to the time offset between any two of the M nodes within the first preset time, whether N nodes are affected by pseudo GNSS interference, wherein N is an integer greater than or equal to 1, wherein the step of acquiring the time offset between any two of the M nodes within the first preset time comprises:

   receiving messages from the M nodes within the first preset time, respectively;
   parsing transmission detection data of each node from the message of the node; and
   calculating, according to the transmission detection data of any two nodes, the time offset between the two nodes, and
   wherein the step of determining (201), according to the time offset between any two of the M nodes within the first preset time, whether N nodes are affected by pseudo GNSS interference comprises:

   determining (601), in response to the number of first nodes relative to an $i^{th}$ node among the M nodes being greater than the number of second nodes relative to the $i^{th}$ node, that the $i^{th}$ node and the second nodes are affected by pseudo GNSS interference, and that the first nodes are not affected by pseudo GNSS interference,
   wherein the first node refers to a node at which a fluctuation range of a third fluctuation standard line of the time offset from the $i^{th}$ node within the first preset time is entirely out of a fluctuation range of a fourth fluctuation standard line, and the second node refers to a node at which the fluctuation range of the third fluctuation standard line of the time offset from the $i^{th}$ node in part or all of the first preset time is within the fluctuation range of the fourth fluctuation standard line, and
   wherein the fourth fluctuation standard line refers to a fluctuation standard line of the time offset between a first or second node and the $i^{th}$ node in a second preset time under a condition that the first or second node is not affected by pseudo GNSS interference

2. The method according to claim 1, wherein the M nodes comprise a detecting node and a detected node, and the step of acquiring (200) the time offset between any two of the M nodes within the first preset time comprises:

   acquiring (300) the time offset between the detecting node and the detected node within the first preset time, and the step of determining (201), according to the time offset between any two of the M nodes within the first preset time, whether N nodes are affected by pseudo GNSS interference comprises:

   determining (301), according to the time offset between the detecting node and the detected node within the first preset time, a fluctuation range of a first fluctuation standard line of the time offset between the detecting node and the detected node; and
   determining (302), according to the fluctuation range of the first fluctuation standard line within the first preset time, whether the detected node is affected by pseudo GNSS interference.

3. The method according to claim 2, wherein the step of determining (302), according to the fluctuation range of the first fluctuation standard line within the first preset time, whether the detected node is affected by pseudo GNSS interference comprises at least one of:

determining that the detected node is affected by pseudo GNSS interference in response to the fluctuation range of the first fluctuation standard line within the first preset time being entirely out of a fluctuation range of a second fluctuation standard line, and

determining that the detected node is not affected by pseudo GNSS interference in response to the fluctuation range of the first fluctuation standard line in part or all of the first preset time being within the fluctuation range of the second fluctuation standard line,

wherein the second fluctuation standard line refers to a fluctuation standard line of the time offset between the detecting node and the detected node within a second preset time under a condition that the detected node is not affected by pseudo GNSS interference.

4. The method according to claim 2 or 3, wherein the detecting node comprises at least one of: a trusted node, a node detected by the trusted node as not being affected by pseudo GNSS interference, a node that will not be affected by pseudo GNSS interference, at least one node with a higher priority than the detected node, and a node with a highest priority of the at least one node with a higher priority than the detected node.

5. The method according to claim 1, wherein the step of acquiring (200) the time offset between any two of the M nodes within the first preset time comprises:

acquiring (900) a time offset between each detecting node with a higher priority than a detected node and the detected node within the first preset time, and

the step of determining (201), according to the time offset between any two of the M nodes within the first preset time, whether N nodes are affected by pseudo GNSS interference comprises:

determining (901) that the detected node is affected by pseudo GNSS interference in response to a sum of priorities of third nodes being greater than a sum of priorities of fourth nodes among the detecting nodes with a higher priority than the detected node;

determining (901) that the detected node is not affected by pseudo GNSS interference in response to the sum of priorities of the third nodes being smaller than the sum of priorities of the fourth nodes among the detecting nodes with a higher priority than the detected node,

wherein the third node refers to a node at which a fluctuation range of a fifth fluctuation standard line of the time offset from the detected node within the first preset time is entirely out of a fluctuation range of a sixth fluctuation standard line, and the fourth node refers to a node at which the fluctuation range of the fifth fluctuation standard line of the time offset from the detected node in part or all of the first preset time is within the fluctuation range of the sixth fluctuation standard line, and

wherein the six fluctuation standard line refers to a fluctuation standard line of the time offset between the detecting node and the detected node within a second preset time under a condition that the detected node is not affected by pseudo GNSS interference.

6. An apparatus for detecting pseudo Global Navigation Satellite System, called GNSS, interference, comprising a processor, and a computer readable storage medium having instructions stored thereon which, when executed by the processor, causes the processor to implement the method for detecting pseudo GNSS interference according to any one of claims 1 to 5.

7. A computer readable storage medium having a computer program stored thereon which, when executed by a processor, causes the processor to implement the method for detecting pseudo GNSS interference according to any one of claims 1 to 5.

8. A system for detecting pseudo Global Navigation Satellite System, called GNSS, interference, comprising M nodes (1101), and the apparatus for detecting pseudo GNSS interference of claim 6 (1102).

**Patentansprüche**

1. Ein computer-implementiertes Verfahren zum Detektieren von Pseudo-Global Navigation Satellite System, genannt GNSS, Interferenzen, das **dadurch gekennzeichnet** ist:

Erfassen (200) eines Zeitversatzes zwischen zwei beliebigen von M Knoten innerhalb einer ersten voreingestellten Zeit, wobei M eine ganze Zahl größer als oder gleich 2 ist; und

Bestimmen (201), entsprechend dem Zeitversatz zwischen zwei beliebigen der M Knoten innerhalb der ersten voreingestellten Zeit, ob N Knoten von Pseudo-GNSS-Interferenz betroffen sind, wobei N eine ganze Zahl größer oder gleich 1 ist,

wobei der Schritt des Erfassens des Zeitversatzes zwischen zwei beliebigen der M-Knoten innerhalb der ersten voreingestellten Zeit umfasst:

Empfangen von Nachrichten von den M-Knoten innerhalb der ersten voreingestellten Zeit;

Analysieren der Übertragungserkennungsdaten jedes Knotens aus der Nachricht des Knotens; und

Berechnen des Zeitversatzes zwischen den beiden Knoten anhand der Übertragungserkennungsdaten zweier beliebiger Knoten, und

wobei der Schritt des Bestimmens (201), entsprechend dem Zeitversatz zwischen zwei beliebigen der M Knoten innerhalb der ersten voreingestellten Zeit, ob N Knoten von Pseudo-GNSS-Interferenz betroffen sind, umfasst:

Bestimmen (601) als Reaktion darauf, dass die Anzahl der ersten Knoten relativ zu einem $i^{th}$-Knoten unter den M-Knoten größer ist als die Anzahl der zweiten Knoten relativ zu dem $i^{th}$-Knoten, dass der $i^{th}$-Knoten und die zweiten Knoten von Pseudo-GNSS-Interferenz betroffen sind und dass die ersten Knoten nicht von Pseudo-GNSS-Interferenz betroffen sind,

wobei sich der erste Knoten auf einen Knoten bezieht, bei dem ein Schwankungsbereich einer dritten Schwankungsnormallinie des Zeitversatzes vom $i^{th}$-Knoten innerhalb der ersten voreingestellten Zeit vollständig außerhalb eines Schwankungsbereichs einer vierten Schwankungsnormallinie liegt, und sich der zweite Knoten auf einen Knoten bezieht, bei dem der Schwankungsbereich der dritten Schwankungsnormallinie des Zeitversatzes vom $i^{th}$-Knoten in einem Teil oder während der gesamten ersten voreingestellten Zeit innerhalb des Schwankungsbereichs der vierten Schwankungsnormallinie liegt, und

wobei sich die vierte Fluktuationsstandardlinie auf eine Fluktuationsstandardlinie des Zeitversatzes zwischen einem ersten oder zweiten Knoten und dem $i^{th}$ Knoten in einer zweiten voreingestellten Zeit unter der Bedingung bezieht, dass der erste oder zweite Knoten nicht durch Pseudo-GNSS-Interferenz beeinflusst wird.

2. Verfahren nach Anspruch 1, wobei die M-Knoten einen Detektierungsknoten und einen detektierten Knoten umfassen und der Schritt des Erfassens (200) des Zeitversatzes zwischen zwei beliebigen der M-Knoten innerhalb der ersten voreingestellten Zeit umfasst:

Erfassen (300) des Zeitversatzes zwischen dem Detektierungsknoten und dem detektierten Knoten innerhalb der ersten voreingestellten Zeit, und

der Schritt des Bestimmens (201), entsprechend dem Zeitversatz zwischen zwei beliebigen der M Knoten innerhalb der ersten voreingestellten Zeit, ob N Knoten von Pseudo-GNSS-Interferenz betroffen sind, umfasst:

Bestimmen (301), entsprechend dem Zeitversatz zwischen dem Detektierungsknoten und dem detektierten Knoten innerhalb der ersten voreingestellten Zeit, eines Schwankungsbereichs einer ersten Schwankungsstandardlinie des Zeitversatzes zwischen dem Detektierungsknoten und dem detektierten Knoten; und

Bestimmen (302), entsprechend dem Fluktuationsbereich der ersten Fluktuationsstandardlinie innerhalb der ersten voreingestellten Zeit, ob der detektierte Knoten von Pseudo-GNSS-Interferenz betroffen ist.

3. Verfahren nach Anspruch 2, wobei der Schritt des Bestimmens (302) gemäß dem Fluktuationsbereich der ersten Fluktuationsstandardlinie innerhalb der ersten voreingestellten Zeit, ob der detektierte Knoten von Pseudo-GNSS-Interferenz betroffen ist, mindestens einen der folgenden Schritte umfasst:

Bestimmen, dass der detektierte Knoten von einer Pseudo-GNSS-Interferenz betroffen ist, als Reaktion darauf, dass der Schwankungsbereich der ersten Schwankungsstandardlinie innerhalb der ersten voreingestellten Zeit vollständig außerhalb eines Schwankungsbereichs einer zweiten Schwankungsstandardlinie liegt, und

Bestimmen, dass der detektierte Knoten nicht von Pseudo-GNSS-Interferenz betroffen ist, wenn der Schwankungsbereich der ersten Schwankungsnormallinie teilweise oder ganz innerhalb des Schwankungsbereichs der zweiten Schwankungsnormallinie liegt,
wobei sich die zweite Fluktuationsstandardlinie auf eine Fluktuationsstandardlinie des Zeitversatzes zwischen dem Detektierungsknoten und dem detektierten Knoten innerhalb einer zweiten voreingestellten Zeit unter der Bedingung bezieht, dass der detektierte Knoten nicht durch Pseudo-GNSS-Interferenz beeinflusst wird.

4.  Verfahren nach Anspruch 2 oder 3, wobei der Detektierungsknoten mindestens eines der Folgenden umfasst: einen vertrauenswürdigen Knoten, einen Knoten, der von dem vertrauenswürdigen Knoten als nicht von der Pseudo-GNSS-Interferenz betroffen detektiert wurde, einen Knoten, der nicht von der Pseudo-GNSS-Interferenz betroffen sein wird, mindestens einen Knoten mit einer höheren Priorität als der detektierte Knoten und einen Knoten mit der höchsten Priorität des mindestens einen Knotens mit einer höheren Priorität als der detektierte Knoten.

5.  Verfahren nach Anspruch 1, wobei der Schritt des Erfassens (200) des Zeitversatzes zwischen zwei beliebigen der M-Knoten innerhalb der ersten voreingestellten Zeit umfasst:

   Erfassen (900) eines Zeitversatzes zwischen jedem Detektierungsknoten mit einer höheren Priorität als ein detektierter Knoten und dem detektierten Knoten innerhalb der ersten voreingestellten Zeit, und
   der Schritt des Bestimmens (201), entsprechend dem Zeitversatz zwischen zwei beliebigen der M Knoten innerhalb der ersten voreingestellten Zeit, ob N Knoten von Pseudo-GNSS-Interferenz betroffen sind, umfasst:

      Bestimmen (901), dass der detektierte Knoten von einer Pseudo-GNSS-Interferenz betroffen ist, als Reaktion darauf, dass eine Summe von Prioritäten dritter Knoten größer ist als eine Summe von Prioritäten vierter Knoten unter den Detektierungsknoten mit einer höheren Priorität als der detektierte Knoten;
      Bestimmen (901), dass der detektierte Knoten nicht von einer Pseudo-GNSS-Interferenz betroffen ist, als Reaktion darauf, dass die Summe der Prioritäten der dritten Knoten kleiner ist als die Summe der Prioritäten der vierten Knoten unter den Detektierungsknoten mit einer höheren Priorität als der detektierte Knoten, wobei sich der dritte Knoten auf einen Knoten bezieht, bei dem ein Schwankungsbereich einer fünften Schwankungsnormallinie des Zeitversatzes von dem detektierten Knoten innerhalb der ersten voreingestellten Zeit vollständig außerhalb eines Schwankungsbereichs einer sechsten Schwankungsnormallinie liegt, und sich der vierte Knoten auf einen Knoten bezieht, bei dem der Schwankungsbereich der fünften Schwankungsnormallinie des Zeitversatzes von dem detektierten Knoten in einem Teil oder in der gesamten ersten voreingestellten Zeit innerhalb des Schwankungsbereichs der sechsten Schwankungsnormallinie liegt, und
      wobei sich die sechs Fluktuationsstandardlinien auf eine Fluktuationsstandardlinie des Zeitversatzes zwischen dem Detektierungsknoten und dem detektierten Knoten innerhalb einer zweiten voreingestellten Zeit unter der Bedingung beziehen, dass der detektierte Knoten nicht durch Pseudo-GNSS-Interferenz beeinflusst wird.

6.  Vorrichtung zum Detektieren von Pseudo-Interferenzen des globalen Navigationssatellitensystems, genannt GNSS, mit einem Prozessor und einem computerlesbaren Speichermedium, auf dem Befehle gespeichert sind, die, wenn sie von dem Prozessor ausgeführt werden, den Prozessor veranlassen, das Verfahren zum Detektieren von Pseudo-GNSS-Interferenzen nach einem der Ansprüche 1 bis 5 zu implementieren.

7.  Computerlesbares Speichermedium mit einem darauf gespeicherten Computerprogramm, das, wenn es von einem Prozessor ausgeführt wird, den Prozessor veranlasst, das Verfahren zum Detektieren von Pseudo-GNSS-Interferenzen nach einem der Ansprüche 1 bis 5 zu implementieren.

8.  System zum Detektieren von Pseudo-Interferenzen des globalen Navigationssatellitensystems, genannt GNSS, mit M-Knoten (1101) und der Vorrichtung zum Detektieren von Pseudo-GNSS-Interferenzen nach Anspruch 6 (1102).

**Revendications**

1.  Procédé mis en oeuvre par ordinateur pour détecter les pseudo-interférences du système mondial de navigation par satellite, appelé GNSS, qui se **caractérise en ce que** :

   acquérir (200) un décalage temporel entre deux noeuds quelconques parmi M dans un premier temps prédéfini, M étant un nombre entier supérieur ou égal à 2 ; et
   déterminer (201), en fonction du décalage temporel entre deux des M noeuds dans le premier temps prédéfini, si N noeuds sont affectés par des pseudo-interférences du GNSS, N étant un nombre entier supérieur ou égal à 1, dans lequel l'étape d'acquérir un décalage temporel entre deux des M noeuds dans le premier temps prédéfini comprend :

recevoir des messages des M noeuds dans le premier temps prédéfini, respectivement ;
analyse des données de détection de transmission de chaque noeud à partir du message du noeud ; et
calculer, en fonction des données de détection de transmission de deux noeuds quelconques, le décalage temporel entre les deux noeuds, et
dans lequel l'étape consistant à déterminer (201), en fonction du décalage temporel entre deux des M noeuds dans le première temps prédéfini, si N noeuds sont affectés par des pseudo-interférences du GNSS comprend :

déterminer (601), en réponse au nombre de premiers noeuds relatifs à un noeud $i^{th}$ parmi les M noeuds, supérieur au nombre de seconds noeuds relatifs au noeud $i^{th}$, que le noeud $i^{th}$ et les seconds noeuds sont affectés par une pseudo-interférence du GNSS et que les premiers noeuds ne sont pas affectés par une pseudo-interférence du GNSS,
dans lequel le premier noeud se réfère à un noeud pour lequel une plage de fluctuation d'une troisième ligne standard de fluctuation du décalage temporel par rapport au noeud $i^{th}$ dans le premier temps prédéfini est entièrement en dehors d'une plage de fluctuation d'une quatrième ligne standard de fluctuation, et le deuxième noeud se réfère à un noeud pour lequel la plage de fluctuation de la troisième ligne standard de fluctuation du décalage temporel par rapport au noeud $i^{th}$ dans une partie ou la totalité du premier temps prédéfini se trouve dans la plage de fluctuation de la quatrième ligne standard de fluctuation, et
dans laquelle la quatrième ligne standard de fluctuation fait référence à une ligne standard de fluctuation du décalage temporel entre un premier ou un deuxième noeud et le noeud $i^{th}$ dans un deuxième temps prédéfini, à condition que le premier ou le deuxième noeud ne soit pas affecté par des pseudo-interférences du GNSS.

2. Procédé selon la revendication 1, dans lequel les M noeuds comprennent un noeud de détection et un noeud détecté, et l'étape d'acquérir (200) du décalage temporel entre deux quelconques des M noeuds dans le premier temps prédéfini comprend :

acquérir (300) le décalage temporel entre le noeud de détection et le noeud détecté dans le première temps prédéfini, et
l'étape consistant à déterminer (201), en fonction du décalage temporel entre deux des M noeuds dans le première temps prédéfini, si les N noeuds sont affectés par les pseudo-interférences du GNSS comprend :

déterminer (301), en fonction du décalage temporel entre le noeud de détection et le noeud détecté dans le première temps prédéfini, une plage de fluctuation d'une première ligne standard de fluctuation du décalage temporel entre le noeud de détection et le noeud détecté ; et
déterminer (302), en fonction de la plage de fluctuation de la première ligne standard de fluctuation dans le premier temps prédéfini, si le noeud détecté est affecté par des pseudo-interférences du GNSS.

3. Procédé selon la revendication 2, dans lequel l'étape consistant à déterminer (302), en fonction de la plage de fluctuation de la première ligne standard de fluctuation dans le premier temps prédéfini, si le noeud détecté est affecté par des pseudo-interférences du GNSS comprend au moins l'un des suivants :

déterminer que le noeud détecté est affecté par une pseudo-interférence du GNSS en réponse à la plage de fluctuation de la première ligne standard de fluctuation dans le premier temps prédéfini étant entièrement en dehors d'une plage de fluctuation d'une deuxième ligne standard de fluctuation, et
déterminer que le noeud détecté n'est pas affecté par des pseudo-interférences du GNSS en réponse à la plage de fluctuation de la première ligne standard de fluctuation pendant une partie ou la totalité du première temps prédéfini se situant dans la plage de fluctuation de la deuxième ligne standard de fluctuation,
dans laquelle la deuxième ligne standard de fluctuation fait référence à une ligne standard de fluctuation du décalage temporel entre le noeud de détection et le noeud détecté dans un deuxième temps prédéfini, à condition que le noeud détecté ne soit pas affecté par des pseudo-interférences du GNSS.

4. Procédé selon la revendication 2 ou 3, dans lequel le noeud de détection comprend au moins l'un des suivants :

un noeud de confiance, un noeud détecté par le noeud de confiance comme n'étant pas affecté par une pseudo-interférence du GNSS, un noeud qui ne sera pas affecté par une pseudo-interférence du GNSS, au moins un noeud avec une priorité plus élevée que le noeud détecté, et un noeud avec une priorité la plus élevée parmi les au moins un noeud avec une priorité plus élevée que le noeud détecté.

5. Procédé selon la revendication 1, dans lequel l'étape d'acquérir (200) un décalage temporel entre deux quelconques des M noeuds dans le premier temps prédéfini comprend :

acquérir (900) un décalage temporel entre chaque noeud de détection ayant une priorité plus élevée qu'un noeud détecté et le noeud détecté dans le premier temps prédéfini, et
l'étape consistant à déterminer (201), en fonction du décalage temporel entre deux des M noeuds dans le première temps prédéfini, si les N noeuds sont affectés par les pseudo-interférences du GNSS comprend :

déterminer (901) que le noeud détecté est affecté par une pseudo-interférence du GNSS en réponse à une somme de priorités de troisièmes noeuds supérieure à une somme de priorités de quatrièmes noeuds parmi les noeuds de détection ayant une priorité plus élevée que le noeud détecté ;
déterminer (901) que le noeud détecté n'est pas affecté par des pseudo-interférences du GNSS, la somme des priorités des troisièmes noeuds étant inférieure à la somme des priorités des quatrièmes noeuds parmi les noeuds de détection ayant une priorité supérieure à celle du noeud détecté,
dans lequel le troisième noeud fait référence à un noeud pour lequel une plage de fluctuation d'une cinquième ligne standard de fluctuation du décalage temporel par rapport au noeud détecté dans le premier temps prédéfini est entièrement en dehors d'une plage de fluctuation d'une sixième ligne standard de fluctuation, et le quatrième noeud fait référence à un noeud pour lequel la plage de fluctuation de la cinquième ligne standard de fluctuation du décalage temporel par rapport au noeud détecté dans une partie ou la totalité du premier temps prédéfini se situe dans la plage de fluctuation de la sixième ligne standard de fluctuation, et dans lequel la ligne standard de six fluctuations fait référence à une ligne standard de fluctuation du décalage temporel entre le noeud de détection et le noeud détecté dans un deuxième temps prédéfini, à condition que le noeud détecté ne soit pas affecté par des pseudo-interférences du GNSS.

6. Appareil de détection de pseudo-interférences du système mondial de navigation par satellite, appelé GNSS, comprenant un processeur, et un support de stockage lisible par ordinateur sur lequel sont stockées des instructions qui, lorsqu'elles sont exécutées par le processeur, amènent ce dernier à mettre en oeuvre le procédé de détection de pseudo-interférences du GNSS selon l'une quelconque des revendications 1 à 5.

7. Support de stockage lisible par ordinateur sur lequel est stocké un programme d'ordinateur qui, lorsqu'il est exécuté par un processeur, amène le processeur à mettre en oeuvre le procédé de détection de pseudo-interférences du GNSS selon l'une quelconque des revendications 1 à 5.

8. Système de détection des pseudo-interférences du système mondial de navigation par satellite, appelé GNSS, comprenant M noeuds (1101), et l'appareil de détection des pseudo-interférences du GNSS de la revendication 6 (1102).

Satellite 1     Satellite 2     Satellite 3     Satellite 4

$\rho_{2, B}$     $\rho_{3, B}$     $\rho_{4, B}$

$\rho_{3, A}$

$\rho_{2, A}$     $\rho_{4, A}$

Interference $\rho_{1, B}$
device

$\rho_{1, A}$

B            A

FIG. 1

200

Acquire a time offset between any two of M nodes
within a first preset time, M is an integer greater than or
equal to 2

201

Determine, according to the time offset between any two
of the M nodes within the first preset time, whether N
nodes are affected by pseudo GNSS interference, N is an
integer greater than or equal to 1

FIG. 2

300

Acquire a time offset between a detecting node and a
detected node within the first preset time

301

Determine, according to the time offset between the
detecting node and the detected node within the first
preset time, a fluctuation range of a first fluctuation
standard line of the time offset between the detecting
node and the detected node

302

Determine, according to the fluctuation range of the first
fluctuation standard line within the first preset time,
whether the detected node is affected by pseudo GNSS
interference

FIG. 3

No. 1

No. 2

Apparatus for detecting pseudo
GNSS interference

No. 3        No. 4        No. 5

FIG. 4

FIG. 5

_600

Acquire a time offset between any two of M nodes within a first preset time, M is an integer greater than or equal to 2

_601

Determine, when the number of first nodes relative to an $i^{th}$ node among the M nodes is greater than the number of second nodes relative to the $i^{th}$ node, that the $i^{th}$ node and the second nodes are affected by pseudo GNSS interference, and that the first nodes are not affected by pseudo GNSS interference. The first node refers to a node at which a fluctuation range of a third fluctuation standard line of the time offset from the $i^{th}$ node within the first preset time is entirely out of a fluctuation range of a fourth fluctuation standard line, the second node refers to a node at which the fluctuation range of the third fluctuation standard line of the time offset from the $i^{th}$ node in part or all of the first preset time is within the fluctuation range of the fourth fluctuation standard line, and the fourth fluctuation standard line refers to a fluctuation standard line of the time offset between a first or second node and the $i^{th}$ node in a second preset time under a condition that the first or second node is not affected by pseudo GNSS interference

FIG. 6

Effective
interference
area

1    2

3    4    5

6    7

FIG. 7

800

Acquire a time offset between a detecting node and a detected node within the first preset time, the detecting node has a higher priority than the detected node

801

Determine, according to the time offset between the detecting node and the detected node within the first preset time, a fluctuation range of a first fluctuation standard line of the time offset between the detecting node and the detected node

802

Determine, according to the fluctuation range of the first fluctuation standard line within the first preset time, whether the detected node is affected by pseudo GNSS interference

FIG. 8

900

Acquire a time offset between each detecting node with a priority higher than a detected node and the detected node within the first preset time

901

Determine that the detected node is affected by pseudo GNSS interference when a sum of priorities of third nodes is greater than a sum of priorities of fourth nodes among the detecting nodes with a higher priority than the detected node; and determine that the detected node is not affected by pseudo GNSS interference when the sum of priorities of the third nodes is smaller than the sum of priorities of the fourth nodes among the detecting nodes with a higher priority than the detected node, the third node refers to a node at which a fluctuation range of a fifth fluctuation standard line of the time offset from the detected node within the first preset time is entirely out of a fluctuation range of a sixth fluctuation standard line, the fourth node refers to a node at which the fluctuation range of the fifth fluctuation standard line of the time offset from the detected node in part or all of the first preset time is within the fluctuation range of the sixth fluctuation standard line, and the six fluctuation standard line refers to a fluctuation standard line of the time offset between the detecting node and the detected node within a second preset time under a condition that the detected node is not affected by pseudo GNSS interference

FIG. 9

1001

1002

| Time offset acquiring module | Time offset → | Pseudo GNSS interference determining module |

Pseudo GNSS interference or not

Alarm generation module

1003

FIG. 10

1101

1102

| Node | Message → | Apparatus for detecting pseudo GNSS interference |

FIG. 11

**EP 3 882 666 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20060234641 A1

- WO 2013177181 A2

### Non-patent literature cited in the description

- Multi-node Cooperative GPS Deception Jamming Detection Technology Research. *CHINESE MASTER' S THESES FULL-TEXT DATABASE, INFORMATION SCIENCE AND TECHNOLOGY,* 15 April 2018, 1-73